# EUROPÄISCHE PATENTSCHRIFT

(11) **EP 3 230 526 B1**
(45) Veröffentlichungstag und Bekanntmachung des Hinweises auf die Patenterteilung: **21.11.2018**
(21) Anmeldenummer: 15820027.9
(22) Anmeldetag: 10.12.2015
(51) Int. Cl.: E01B 35/00, B61K 9/00, E01B 27/17

(54) **VERFAHREN ZUR KALIBRIERUNG EINER VORRICHTUNG ZUM VERMESSEN VON GLEISEN**
METHOD FOR CALIBRATING A DEVICE FOR MEASURING TRACKS
PROCÉDÉ D'ÉTALONNAGE D'UN DISPOSITIF SERVANT À MESURER DES VOIES FERRÉES

(30) Priorität: 12.12.2014 AT 509012014
(43) Veröffentlichungstag der Anmeldung: 18.10.2017
(73) Patentinhaber: HP3 Real GmbH, 1010 Wien (AT)
(72) Erfinder: LICHTBERGER, Bernhard, 4230 Pregarten (AT)
(74) Vertreter: Patentanwaltskanzlei Hübscher
(86) Internationale Anmeldenummer: PCT/AT2015/050313
(87) Internationale Veröffentlichungsnummer: WO 2016/090401

(56) Entgegenhaltungen:
- EP-A2- 0 652 325
- DE-A1- 4 102 871

## Beschreibung

### Technisches Gebiet

Die Erfindung bezieht sich auf ein Verfahren zur Kalibrierung einer Vorrichtung zum Vermessen von Gleisen mit wenigstens einem einer Hebe- Richteinrichtung zugeordneten gleisfahrbaren Gleismesswagen und mit Gleislagemesssensoren zur Messung der Höhenlage, der Richtung und der Überhöhung der Schienen des Gleises mit dem Maschinenrahmen als Referenznulllinie, wobei dem Gleismesswagen eine Messwagenhebe- und Senkvorrichtung zugeordnet ist. Zudem wird eine Vorrichtung zum Vermessen von Gleisen mit einer Kalibriereinrichtung vorgeschlagen.

### Stand der Technik

Gleisstopfmaschinen sind Maschinen zum Berichtigen der Gleislage. Dazu werden Messsysteme benutzt welche die Gleishöhen-Istlage und die Gleisrichtungs-Istlage sowie die Überhöhungs-Istlage des Gleises während der Arbeit vermessen. Mit Hilfe eines Gleishebe-/Gleisrichtaggregates wird der Gleisrost angehoben und seitlich ausgerichtet und in dieser Lage durch Verdichten des Schotters unter den Schwellen mit Hilfe eines Gleisstopfaggregates fixiert. Die gemessenen Gleislage-Istwerte werden mit den Gleislage-Sollwerten die von einem Gleisgeometrie-Leitcomputer nach den Gleislage-Sollplänen der Bahnverwaltung errechnet werden verglichen und zur Steuerung und Regelung des Gleishebe-/Gleisrichtaggregates benutzt. Das Heben und Richten des Gleisrostes erfolgt dabei über entsprechende hydraulische Hebe- und Richtzylinder mit Proportional- oder Servosteuerung.

Üblich sind Messanlagen die Stahlsehnen benutzen bzw. optische Messanlagen. Stahlsehnen sind zwischen üblicherweise drei Messwagen gespannt, wobei der mittlere Wagen einen Richtwertgeber trägt der durch die Sehne ausgelenkt wird. Da sich in der Nähe dieses Messgebers auch zum Verdichten des Gleises notwendige Stopfaggregate befinden, ist die Sehne im engen Bogen oftmals hinderlich. Damit die Stopfaggregate nicht mit der Sehne in Konflikt kommen, werden die Sehnen an den Spannpunkten häufig mechanisch seitlich ausgelenkt, der dadurch entstehende Messfehler wird elektronisch kompensiert. Für die Messung der Höhenlage der Gleise werden über beiden Schienen so genannte Nivellierseile gespannt. Die beiden Messpunkte über den Schienen werden meist über Winkelgeber (Nivellierwertmessgeber) abgetastet. Die Nivelliersehnen müssen oben angeordnet werden, da im unteren Bereich die Stopfaggregate und die Fahrwerke der Stopfmaschine im Weg sind. Diese Nivelliersehnen werden bis in die Kabinen der Stopfaggregate gezogen. Auf den Messwagen sind Neigungsmesser aufgebaut, um die Querneigung des Gleises zu erfassen.

Die gemessenen Auslenkungen durch die Nivelliermesswertgeber, Richtwertmessgeber und Überhöhungsmesswertgeber werden in ein elektrisches proportionales Signal umgewandelt. Für die Steuerung der Gleisstopfmaschine sind für jeden der Messwertgeber die Größen Skalenfaktor (z.B. mV/mm oder mA/mm) und die absolute Null-Lage der Messwertgeber für deren Genauigkeit von ausschlaggebender Bedeutung. Um diese Werte zu erfassen, ist eine absolute Kalibrierung notwendig. Absolute Kalibrierung meint hier die Kalibrierung bezüglich einer geraden Referenzlinie zum Bestimmen des Nullwertes der Messgeber. Dies ist deshalb notwendig weil es durch die bauliche Ausführung zu Ungenauigkeiten kommt. Diese Ungenauigkeiten resultieren aus baulichen mechanischen Toleranzen, ungenauer Montage, mechanischen Spielen, Fehlern in der Messkette etc.

Das Problem ist die Nullkalibrierung der Messwertgeber. Nachfolgend soll der Idealfall erläutert werden. Auf einem idealen geraden Gleis werden die Messwagen der Richtanlage quer zur Gleislängsrichtung an eine Seite einer Schiene angepresst, anschließend wird der Nullpunkt des Messwertgebers bestimmt. Für die Richtanlage muss allerdings auch die gegenüberliegende Seite kalibriert werden.

Dazu würde der Messwagen auf einem idealen Gleis (ideales Gleis: beide Schienen bilden ideale Geraden mit gleichem Abstand und liegen genau in einer waagrechten Ebene) gegen die andere Schiene gepresst und der Nullpunkt für diese andere Seite bestimmt werden. Der Grund dafür ist darin zu suchen, dass die Richtung des Gleises immer durch die bogenäußere Schiene vorgegeben ist, da der Zug entlang der bogenäußeren Schiene geführt wird. Die Notwendigkeit einer beiderseitigen Nullkalibrierung für den Richtwertmessgeber ergibt sich durch unterschiedliche mechanische Spiele, unterschiedliche Spurmaße der Messwagen und unterschiedliche elektronische Messstrecken etc.

Allerdings gibt es kein ideales Gleis. Ein Gleis ist mit Längshöhenfehlern, Überhöhungsfehlern, Verwindungen, Richtungsfehlern sowie Spurweitenfehlern behaftet. Dazu kommen unterschiedliche Einsenkungen des Gleises unter Last. Für die absolute Nullkalibrierung eines Gleises wird daher ein so genanntes "Null-Gleis" benötigt. Dazu wird ein Gleisabschnitt von mindestens der Länge der abzugleichenden Messanlage gesucht, welches möglichst geringe Gleislagefehler der oben beschriebenen Art aufweist. Da die geforderten Abgleichsgenauigkeiten unter 1 mm liegen, reichen reale Gleise dafür nicht aus. Vor dem eigentlichen Abgleich muss daher die reale Gleislage mittels geodätischen Messgeräten oder durch andere Methoden (Schnursehne) exakt vermessen werden. Anschließend fährt die Gleisstopfmaschine auf dieses Gleis. Die mittels geodätischen Methoden ermittelten oder mittels anderer Methoden gemessenen Gleisfehler werden nun mittels Distanzstücken unter den Messrädern für die Höhe bzw. zwischen Spurkranz und Schiene ausgeglichen. Anschließend wird die Nullkalibrierung durchgeführt. Die Vermessung der Gleislage erfolgt in der Regel auf einem realen Gleis ohne Belastung. Durch die Belastung mit der Gleisstopfmaschine kann es zu unbekannten Durchbiegungen der Schiene und des Gleisrostes kommen, was die Genauigkeit der Kalibrierung beeinträchtigt. Zuverlässiger ist ein fest einbetoniertes Gleis - dieses aber ist im Normalfall auf freier Strecke nicht zu finden. Die verwendeten Nullkalibriermethoden sind daher kostspielig, zeitaufwendig, nur bedingt genau und nur durch qualifiziertes Fachpersonal durchführbar. Eine Überprüfung des Messsystems auf freier Strecke durch den Maschinenführer ist praktisch unmöglich.

Die DE 41 02 871 A1 offenbart ein gattungsgemäßes Verfahren zur Kalibrierung einer Vorrichtung zum Vermessen von Gleisen gemäß dem Oberbegriff des Anspruchs 1 sowie eine Vorrichtung zum Vermessen von Gleisen gemäß dem Oberbegriff des Anspruchs 5.

### Darstellung der Erfindung

Der Erfindung liegt somit die Aufgabe zugrunde, eine Kalibriervorrichtung, der eingangs geschilderten Art zu schaffen, welche Ungenauigkeiten vermeidet und eine einfache und rasche Kalibrierung erlaubt.

Die Erfindung löst die gestellte Aufgabe dadurch, dass eine dem Maschinenrahmen zugeordnete Kalibriervorrichtung vorgesehen ist, wobei der Gleismesswagen zum Kalibrieren der Gleislagemesssensoren zunächst aus einer vom Gleis abgehobenen Parkposition ins Gleis oder in eine Zwischenposition abgesenkt wird, wonach Kalibrieranschläge mit einem Stelltrieb aus einer Ruhelage in eine Kalibrierlage verlagert werden, gegen welche Kalibrieranschläge in weiterer Folge der Gleismesswagen angehoben und angestellt wird, wonach die sich ergebenden Werte der Gleislagemesssensoren ausgelesen und als Kalibrierwert in eine Messanlage eingelesen und abgespeichert werden, wonach der Gleismesswagen in das Gleis abgesenkt wird und wonach gegebenenfalls die Kalibrieranschläge mit dem Stelltrieb aus ihrer Kalibrierlage in ihre Ruhelage verlagert werden.

Erfindungsgemäß bildet der Maschinenrahmen die absolute Null-Referenz. Auf dem Maschinenrahmen werden über hydraulische Kalibrierzylinder zwischen einer Ruhelage in eine Kalibrierlage verlagerbare Kalibrieranschläge für den/die Messwagen, üblicherweise drei, vorgesehen. Die Kalibrieranschläge sind links und rechts, also beidseitig, am Maschinenrahmen im Bereich der Messwagen angeordnet und insbesondere bezüglich ihrer Höhenlage einstellbar. Diese Kalibrieranschläge werden nach Fertigstellung der Maschine genau eingemessen und über Justiereinrichtungen eingestellt. Vor dem Nullabgleich fährt der Maschinenführer die Gleisstopfmaschine auf ein relativ ebenes gerades Gleis, um Verwindungen des Maschinenrahmens zu verhindern. Anschließend werden für den absoluten Nullabgleich des Messsystems die Messwagen über die Messwagenhebe- und Senkvorrichtung in eine untere Stellung abgesenkt (z.B. auf die Schienen aufgesetzt). Anschließend werden die Kalibrieranschläge aus ihrer Ruhelage in ihre Kalibrierlage verlagert. Dann werden die Messwagen angehoben und gegen die Kalibrieranschläge mit einer definierten Kraft gepresst. Insbesondere werden dabei die Laufrollen des Messwagens gegen die zugeordneten Kalibrieranschläge gepresst. Die sich dabei ergebenden Sensorwerte werden ausgelesen und in einer Messanlage abgespeichert. Diese Messanlage umfasst üblicherweise eine Rechnereinheit mit zugeordneten Speichern zum Auswerten der Messdaten.

Dabei empfiehlt es sich insbesondere, wenn der Gleismesswagen in der Kalibrierlage zunächst in einem Schritt auf einer Maschinenrahmenseite in Richtung einer Gleismesswagenquerachse über eine Anpressvorrichtung mit dem Spurkranz an den zugeordneten Kalibrieranschlag angepresst und der sich ergebende Wert am Richtwertmesssensor und den Nivellierwertmesssensor als Nullkalibrierwert für diese Maschinenrahmenseite in die Messanlage eingelesen und abgespeichert werden und wenn der Gleismesswagen anschließend in einem zweiten Schritt an der anderen gegenüberliegenden Maschinenrahmenseite in entgegengesetzter Richtung der Gleismesswagenquerachse über die Anpressvorrichtung mit dem Spurkranz an den zugeordneten Kalibrieranschlag angepresst und der sich ergebende Wert am Richtwertmesssensor als Nullkalibrierwert für diese Maschinenrahmenseite in die Messanlage eingelesen und abgespeichert werden. Zunächst werden die Laufrollen des jeweiligen Messwagens also an einer Maschinenseite an die Kalibrieranschläge angepresst. Es erfolgt die Nullkalibrierung dieser Seite für die Richtung. Da die Messräder zylindrisch sind kann zugleich die Kalibrierung der Nivelliermesswertgeber erfolgten. Nach dem Umpressen der Messräder an die gegenüberliegenden Anschläge an der anderen Maschinenseite erfolgt der Nullabgleich des Richtwertgebers für diese Seite. Nach dem Absenken der Messwagen ins Gleis werden die Kalibrieranschläge wieder ausgeschwenkt. Dem beim Kalibrieren am Messwagen gemessenen Istüberhöhungsmesswert wird der Wert des am Maschinenrahmen gemessenen Referenzüberhöhungsmesswertes zugeordnet.

Die Verfahrensschritte werden vorzugsweise von einem Steuerungsprogramm automatisiert durchgeführt.

Vorteilhaft bei dieser erfindungsgemäßen Ausführung ist der Entfall der Notwendigkeit eines "Nullgleises" zum Kalibrieren und die Möglichkeit der automatischen, schnellen, absoluten und genauen Nullkalibrierung des Messsystems auf einer relativ ebenen Strecke. Die Nullkalibrierung kann durch den Maschinenführer vor Ort durchgeführt werden. Der gesamte Messablauf kann automatisch erfolgen. Auf diese Weise kann die Funktion des Messsystems und seine Genauigkeit vor Antritt der Baustellenarbeit schnell überprüft werden. Weitere Vorteile sind dadurch gegeben, dass sich für die Kalibrierung kein Personal ins Gleis begeben muss weil dies oft mit Gefährdungen durch den Zugbetrieb am Nachbargleis verbunden ist. Die Erfindung weist überdies enorme Kosteneinsparpotentiale auf und erhöht die Funktionssicherheit der Gleisstopfmaschine.

### Kurze Beschreibung der Zeichnung

In den Zeichnungen ist der Erfindungsgegenstand beispielsweise dargestellt. Es zeigen
- Fig. 1: eine Gleisstopfmaschine mit Gleisstopfaggregat, Gleishebe-/ Gleisrichtaggregat, Nivelliermesssystem und Gleisrichtmesssystem in Seitenansicht,
- Fig. 2: eine erfindungsgemäße Darstellung der Kalibriereinrichtung mit Messwagen im Querschnitt,
- Fig. 3: ein Ausschnitt mit einem Kalibrieranschlag aus Fig. 2 im vergrößerten Detail,
- Fig. 4: eine schematische Nivelliermessanlage mit Maschinenrahmenreferenzlinie und Kalibrierreferenzlinie, sowie Kalibrieranschlägen und
- Fig. 5: die schematische Richtmessanlage mit Maschinenreferenzlinie und Kalibrierreferenzlinie, sowie den Kalibrieranschlägen links und rechts des Maschinenrahmens.

### Weg zur Ausführung der Erfindung

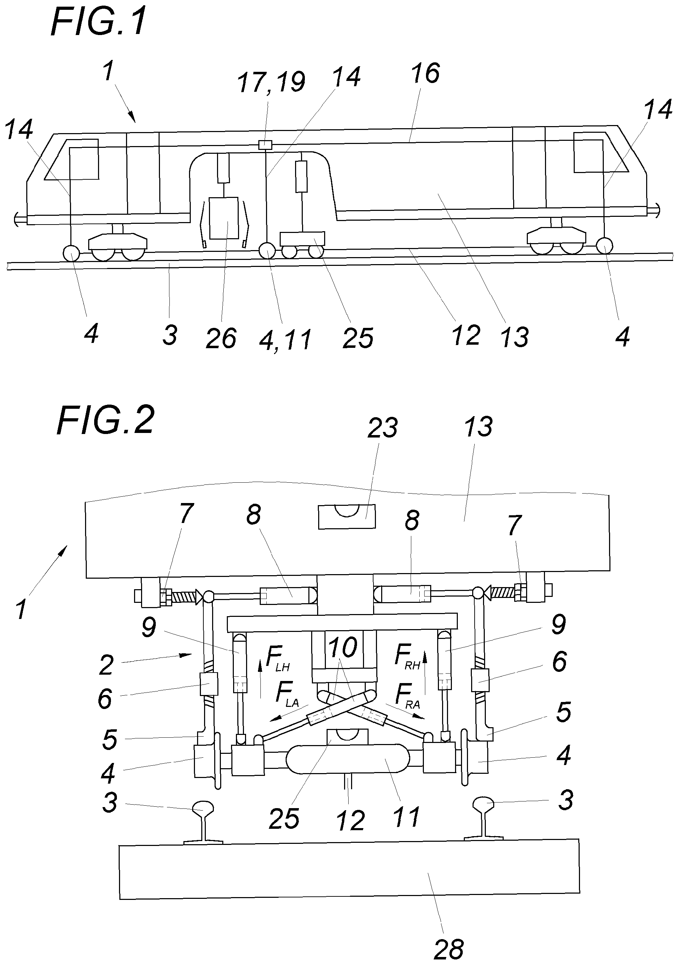

Eine Gleisstopfmaschine 1 (Fig 1.) weist ein Stopfaggregat 26 und ein Gleishebe-/ Richtaggregat 25 auf. Der Maschinenrahmen 13 dient für die absolute Nullkalibrierung als Referenz. Die Richtanlage besteht aus einer Richtstahlsehne 12, den drei Messwagen 4 und einem Richtmessgeber 11. Die Nivellieranlage besteht aus 2 Stahlsehnen 16 die über den Schienen gespannt sind, zwei Nivelliermessgebern 17 mit Stahlsehnenabnahmefühlern 19 und den Nivellierstangen 14. Die Gleisstopfmaschine 1 fährt über Laufwerke auf den Schienen 3.

Als Gleislagemesssensoren zum Vermessen der Schienen eines Gleises (3, 28) sind Sensoren zur Messung der Höhenlage, Nivelliermessgeber 17, der Richtung, Richtmessgeber 11, und der Überhöhung, Neigungsmesser 25 vorgesehen. Dem Gleismesswagen (4) ist eine Messwagenhebe- Senkvorrichtung 9 zugeordnet. Dem Maschinenrahmen 13 ist eine Kalibriervorrichtung 2 mit Kalibrieranschlägen 5 zugeordnet, die bei aus einer vom Gleis abgehobenen Parkposition ins Gleis oder in eine Zwischenposition abgesenktem Gleismesswagen 4 zum Kalibrieren der Gleislagemesssensoren mit einem Stelltrieb aus einer Ruhelage in eine Kalibrierlage verlagerbar sind und gegen die in weiterer Folge der Gleismesswagen 4 anhebbar und anstellbar ist. Die Kalibrieranschläge 5 bilden Anschlagpunkte für den mit der Messwagenhebevorrichtung 9 gegen die Kalibrieranschläge 5 angestellten Messwagen (Fig. 2).

Bei einer erfindungsgemäßen Ausführung der absoluten Kalibriereinrichtung 2 (Fig. 2) dient der Maschinenrahmen 13 als Bezugsreferenz. Am Maschinenrahmen sind in Längsrichtung fluchtend einstellbare Kalibrieranschläge 7 (Gewindeverstellung und fixiert über Kontermuttern z.B.) angebracht. Bis zu diesen Anschlägen werden die Kalibrierhebel mit den Kalibrieranschlägen 5 über hydraulische Kalibrierzylinder 8 ein- oder ausgeschwenkt, also aus ihrer Ruhelage in ihre Kalibrierlage verlagert. Über eine Verstelleinrichtung 6 (Gewinderohr welches den oberen und unteren Hebelarm über Gewinde verbindet, wobei oben z.B. ein Linksgewinde und unten ein Rechtsgewinde befindlich ist) kann die Höhenlage des Kalibrieranschlages 5 justiert werden. Das Messrad 4 wird über die Messwagenhebezylinder 9 nach oben und die Anpresszylinder 10 zur Seite hin an den jeweiligen Kalibrieranschlag 5 angepresst. Am Messwagen ist ein Richtmessgeber 11 angebracht der über einen Mitnehmer die seitliche Position des Richtseils 12 misst. Auf dem Messwagen befindet sich auch ein Neigungsmesser 25. Als Referenz für diesen Neigungsmesser befindet sich am Maschinenrahmen 13 ein Referenzneigungsmesser 23. Um links anzupressen werden beide Messwagenhebezylinder auf "Heben" geschaltet (Kraft F_{LH} und F_{RH} nach oben wirkend) und der Anpresszylinder links wirkend auf Anpressen (Kraft F_{LA}) und der Anpresszylinder rechts kraftlos geschaltet. Zum Abgleich der rechten Seite wird der rechte Anpresszylinder mit Druck beaufschlagt (Kraft F_{RA}) und der linke kraftlos geschaltet. Die Schienen 3 sind auf den Schwellen 28 montiert.

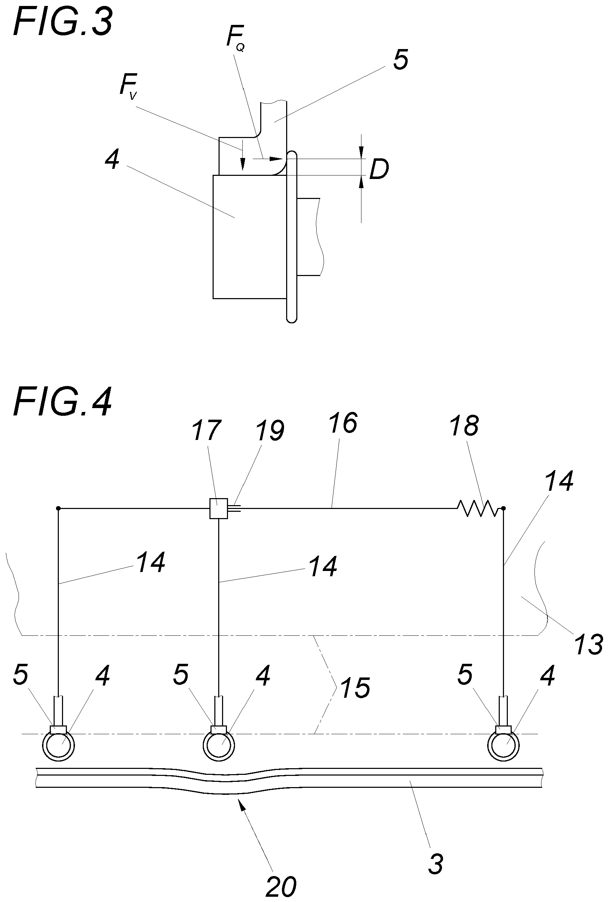

Der Kalibrieranschlag 5 liegt seitlich am Berührpunkt Höhe D an (üblicherweise 14 mm) (Fig. 3). Es wirken die Horizontalkraft F_{Q} und die Vertikalkraft F_{V}.

Fig. 4 zeigt schematisch das Nivelliersystem welches aus den Nivellierstangen 14, dem Nivelliermessgeber 17, dem Mitnehmer 19, dem Nivellierseil 16, einer Seilspannvorrichtung 18 und den Messwagen 4 besteht. Die Referenzlinie 15 der erfindungsgemäßen absoluten Nullkalibriervorrichtung liegt parallel zur Maschinenreferenzlinie 15. Höhenmäßig werden die Räder 4 an die Kalibrieranschläge 5 angepresst. Ein Gleisfehler 20 macht ersichtlich, dass die Kalibrierung mit ins Gleis 3 abgesetzten Messwagen 4 fehlerhaft wäre.

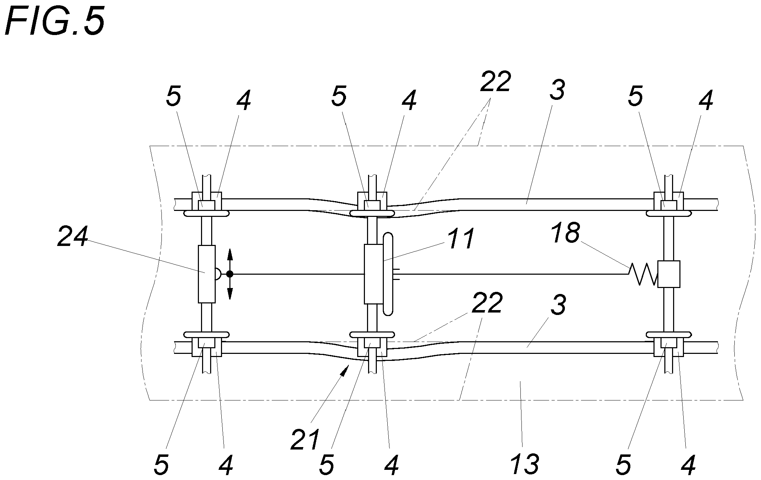

Fig. 5 zeigt schematisch die erfindungsgemäße Ausführung der absoluten Nullkalibrierung für die Richtmessanlage. Die Messräder 4 oben sind an die Kalibrieranschläge 5 angepresst. Die Referenzlinien der Kalibriereinrichtung (strich-punktierte Linien) sind parallel zur Maschinenreferenzlinie 22. 24 zeigt eine mechanische seitliche Seilverstelleinrichtung die zur Skalenfaktorbestimmung verwendet werden kann. Am mittleren Messwagen 4 ist der Richtmessgeber 11 aufgebaut der die seitliche Auslenkung des Richtseils 12 misst. Das Richtseil 12 wird über eine Spannvorrichtung 18 gespannt. Wenn die Nullkalibrierung mit ins Gleis 3 abgesenkten Messwagen 4 durchgeführt würde dann würde diese um den Gleisfehler 21 falsch bestimmt werden.

## Patentansprüche

1. Verfahren zur Kalibrierung einer Vorrichtung zum Vermessen von Gleisen (3, 28) mit wenigstens einem einer Hebe- Richteinrichtung zugeordneten gleisfahrbaren Gleismesswagen (4) und mit Gleislagemesssensoren zur Messung der Höhenlage (17), der Richtung (11) und der Überhöhung (25) der Schienen des Gleises (3, 28) mit dem Maschinenrahmen (13) als Referenznulllinie (15, 22), wobei dem Gleismesswagen (4) eine Messwagenhebe- und Senkvorrichtung (9) zugeordnet ist, **dadurch gekennzeichnet, dass** eine dem Maschinenrahmen zugeordnete Kalibriervorrichtung (2) vorgesehen ist, wobei der Gleismesswagen (4) zum Kalibrieren der Gleislagemesssensoren (17, 11, 25) zunächst aus einer vom Gleis abgehobenen Parkposition ins Gleis oder in eine Zwischenposition abgesenkt wird, wonach Kalibrieranschläge (5) mit einem Stelltrieb (8) aus einer Ruhelage in eine Kalibrierlage verlagert werden, gegen welche Kalibrieranschläge (5) in weiterer Folge der Gleismesswagen (4) angehoben und angestellt wird, wonach die sich ergebenden Werte der Gleislagemesssensoren ausgelesen und als Kalibrierwert in eine Messanlage eingelesen und abgespeichert werden, wonach der Gleismesswagen (4) in das Gleis abgesenkt wird und wonach gegebenenfalls die Kalibrieranschläge (5) mit dem Stelltrieb (8) aus ihrer Kalibrierlage in ihre Ruhelage verlagert werden.

2. Verfahren nach Anspruch 1, **dadurch gekennzeichnet, dass** der Gleismesswagen (4) in der Kalibrierlage zunächst in einem Schritt auf einer Maschinenrahmenseite in Richtung einer Gleismesswagenquerachse über eine Anpressvorrichtung (10) mit dem Spurkranz an den zugeordneten Kalibrieranschlag (5) angepresst und der sich ergebende Wert am Richtwertmesssensor (11) und den Nivellierwertmesssensor (17) als Nullkalibrierwert für diese Maschinenrahmenseite in die Messanlage eingelesen und abgespeichert werden und dass der Gleismesswagen (4) anschließend in einem zweiten Schritt an der anderen gegenüberliegenden Maschinenrahmenseite in entgegengesetzter Richtung der Gleismesswagenquerachse über die Anpressvorrichtung (10) mit dem Spurkranz an den zugeordneten Kalibrieranschlag (5) angepresst und der sich ergebende Wert am Richtwertmesssensor (11) als Nullkalibrierwert für diese Maschinenrahmenseite in die Messanlage eingelesen und abgespeichert werden.

3. Verfahren nach Anspruch 1 oder 2, **dadurch gekennzeichnet, dass** dem beim Kalibrieren am Messwagen (4) gemessenen Istüberhöhungsmesswert (25) der Wert des am Maschinenrahmen (13) gemessenen Referenzüberhöhungsmesswertes (23) zugeordnet wird.

4. Verfahren nach einem der Ansprüche 1 bis 3, **dadurch gekennzeichnet, dass** die Verfahrensschritte von einem Steuerungsprogramm automatisiert durchgeführt werden.

5. Vorrichtung zum Vermessen von Gleisen (3, 28) mit wenigstens einem einer Hebe- Richteinrichtung (25) zugeordneten gleisfahrbaren Gleismesswagen (4) und mit Gleislagemesssensoren zur Messung der Höhenlage (17), der Richtung (11) und der Überhöhung (25) der Schienen des Gleises (3, 28) mit einem Maschinenrahmen (13) als Referenznulllinie (15, 22), wobei dem Gleismesswagen (4) eine Messwagenhebe- und Senkvorrichtung (9) zugeordnet ist, wobei dem Maschinenrahmen (13) eine Kalibriervorrichtung (2) mit Kalibrieranschlägen (5) zugeordnet ist, **dadurch gekennzeichnet, dass** die Kalibrieranschläge (5) bei aus einer vom Gleis abgehobenen Parkposition ins Gleis oder in eine Zwischenposition abgesenktem Gleismesswagen (4) zum Kalibrieren der Gleislagemesssensoren mit einem Stelltrieb (8) aus einer Ruhelage in eine Kalibrierlage verlagerbar sind und gegen die in weiterer Folge der Gleismesswagen (4) anhebbar und anstellbar ist, wobei die Kalibrieranschläge (5) Anschlagpunkte für den mit der Messwagenhebevorrichtung gegen die Kalibrieranschläge (5) angestellten Messwagen bilden.

## Claims

1. Method for calibration of a device for measuring tracks (3, 28) having at least one track-borne track measuring wagon (4) associated with a lifting and adjusting device, and having track position measuring sensors for measuring the height (17), the direction (11) and the superelevation (25) of the rails of the track (3, 28) with the machine frame (13) as a reference zero line (15, 22), wherein a measuring wagon lifting and lowering device (9) is associated with the track measuring wagon (4), **characterised in that** a calibration device (2) associated with the machine frame is provided, wherein, for the purpose of calibration of the track position measuring sensors (17, 11, 25), the track measuring wagon (4) is first lowered from a parked position raised from the track into the track or into an intermediate position, whereupon calibration stops (5) are displaced by an actuator (8) from an inoperative position into a calibration position, against which calibration stops (5) the track measuring wagon (4) is subsequently raised and placed, whereupon the resulting values of the track position measuring sensors are read out and read into, and stored in, a measuring system as a calibration value, whereupon the track measuring wagon (4) is lowered into the track, and whereupon the calibration stops (5) may be displaced as appropriate by the actuator (8) from their calibration position into their inoperative position.

2. Method as claimed in claim 1, **characterised in that**, in a step on a machine frame side, the track measuring wagon (4) in the calibration position is first pressed in the direction of a track measuring wagon transverse axis by a pressing device (1) with the wheel flange against the associated calibration stop (5) and the resulting value at the adjustment value measuring sensor (11) and the levelling value measuring sensor (17) is read into, and stored in, the measuring system as a zero calibration value for this machine frame side, and **in that**, in a second step on the other opposite machine frame side in the opposite direction of the track measuring wagon transverse axis, the track measuring wagon (4) is subsequently pressed by the pressing device (10) with the wheel flange against the associated calibration stop (5), and the resulting value at the adjustment value measuring sensor (11) is read into, and stored in, the measuring system as a zero calibration value for this machine frame side.

3. Method as claimed in claim 1 or 2, **characterised in that** the value of the reference superelevation measurement value (23) measured on the machine frame (13) is associated with the actual superelevation measurement value (25) measured during calibration on the measuring wagon (4).

4. Method as claimed in any one of claims 1 to 3, **characterised in that** the method steps are carried out in an automated manner by a control program.

5. Device for measuring tracks (3, 28) having at least one track-borne track measuring wagon (4) associated with a lifting and adjusting device (25), and having track position measuring sensors for measuring the height (17), the direction (11) and the superelevation (25) of the rails of the track (3, 28) with a machine frame (13) as a reference zero line (15, 22), wherein a measuring wagon lifting and lowering device (9) is associated with the track measuring wagon (4), wherein a calibration device (2) with calibration stops (5) is associated with the machine frame (13), **characterised in that**, when a track measuring wagon (4) is lowered from a parked position raised from the track into the track or into an intermediate position, the calibration stops (5) can be displaced from an inoperative position into a calibration position by an actuator (8) in order to calibrate the track position measuring sensors, and the track measuring wagon (4) can subsequently be raised and placed against said calibration stops, wherein the calibration stops (5) form stopping points for the measuring wagon placed with the measuring wagon lifting device against the calibration stops (5).

## Revendications

1. Procédé d'étalonnage d'un dispositif servant à mesurer des voies ferrées (3, 28), comportant au moins un véhicule de mesurage de voies ferrées (4) mobile sur des voies ferrées, associé à un dispositif de levage et d'orientation, et des capteurs d'auscultation de voies ferrées servant à mesurer le nivellement (17), l'orientation (11) et la surélévation (25) des rails de la voie ferrée (3, 28) avec le châssis de machine (13) en tant que ligne zéro de référence (15, 22), un dispositif de levage et d'abaissement du véhicule de mesurage (9) étant associé au véhicule de mesurage de voies ferrées (4), **caractérisé en ce qu'**il est prévu, un dispositif d'étalonnage (2) associé au châssis de machine, le véhicule de mesurage de voies ferrées (4) étant tout d'abord abaissé pour l'étalonnage des capteurs d'auscultation de voies ferrées (17, 11, 25) hors d'une position de stationnement soulevée des voies ferrées jusque sur la voie ferrée ou dans une position intermédiaire, après quoi des butées d'étalonnage (5) sont déplacées par un mécanisme de commande (8) d'une position de repos à une position d'étalonnage, contre lesquelles butées d'étalonnage (5), le véhicule de mesurage de voies ferrées (4) est ensuite soulevé et positionné, après quoi les valeurs obtenues des capteurs d'auscultation de voies ferrées sont lues, entrées et mémorisées dans un système de mesure en tant que valeur d'étalonnage, après quoi le véhicule de mesurage de voies ferrées (4) est abaissé sur la voie ferrée et après quoi les butées d'étalonnage (5) sont, le cas échéant, déplacées de leur position d'étalonnage à leur position de repos par le mécanisme de commande (8).

2. Procédé selon la revendication 1, **caractérisé en ce que** le véhicule de mesurage de voies ferrées (4) est, dans la position d'étalonnage, tout d'abord pressé dans une étape sur un coté du châssis de machine en direction d'un axe transversal du véhicule de mesurage de voies ferrées par le biais d'un dispositif de pression (10) avec le boudin de roue au niveau de la butée d'étalonnage (5) associée et la valeur obtenue au niveau du capteur de mesure de la valeur indicative (11) et du capteur de mesure de la valeur de nivellement (17) est entrée en tant que valeur d'étalonnage à zéro pour ce côté du châssis de machine dans le système de mesure et mémorisée et **en ce que** le véhicule de mesurage de voies ferrées (4) est ensuite pressé dans une deuxième étape au niveau de l'autre côté opposé du châssis de machine en sens inverse de l'axe transversal du véhicule de mesurage de voies ferrées par le biais du dispositif de pression (10) avec le boudin de roue au niveau de la butée d'étalonnage (5) associée, et la valeur obtenue au niveau du capteur de mesure de la valeur indicative (11) est entrée en tant que valeur d'étalonnage à zéro pour ce côté du châssis de machine dans le système de mesure et est mémorisée.

3. Procédé selon la revendication 1 ou 2, **caractérisé en ce que** la valeur de la valeur de mesurage de la surélévation de référence (23) mesurée au niveau du châssis de machine (13) est associée à la valeur de mesurage de la surélévation effective (25) mesurée au niveau du véhicule de mesurage (4) lors de l'étalonnage.

4. Procédé selon l'une des revendications 1 à 3, **caractérisé en ce que** les étapes de procédé sont réalisées automatiquement par un programme de commande.

5. Dispositif servant à mesurer des voies ferrées (3, 28), comportant au moins un véhicule de mesurage de voies ferrées (4) mobile sur des voies ferrées, associé à un dispositif de levage et d'orientation (25), et des capteurs d'auscultation de voies ferrées servant à mesurer le nivellement (17), l'orientation (11) et la surélévation (25) des rails de la voie ferrée (3, 28) avec un châssis de machine (13) en tant que ligne zéro de référence (15, 22), un dispositif de levage et d'abaissement du véhicule de mesurage (9) étant associé au véhicule de mesurage de voies ferrées (4), un dispositif d'étalonnage (2) étant associé au châssis de machine (13), avec des butées d'étalonnage (5), **caractérisé en ce que** les butées d'étalonnage (5), lorsque le véhicule de mesurage des voies ferrées (4) est abaissé hors d'une position de stationnement soulevée de la voie ferrée jusque sur la voie ferrée ou dans une position intermédiaire, peuvent être déplacées par un mécanisme de commande (8) d'une position de repos à une position d'étalonnage, pour l'étalonnage des capteurs d'auscultation de voies ferrées, et contre lesquelles, le véhicule de mesurage de voies ferrées (4) peut être ensuite soulevé et positionné, les butées d'étalonnage (5) étant formées de points de butée pour le véhicule de mesurage employé avec le dispositif de levage du véhicule de mesurage contre les butée d'étalonnage (5).
